**Europäisches Patentamt**

(19) **European Patent Office**

**Office européen des brevets**

(11) Publication number: **0 271 534 B1**

(12) **EUROPEAN PATENT SPECIFICATION**

(45) Date of publication of patent specification :
**10.04.91 Bulletin 91/15**

(51) Int. Cl.⁵ : **B01D 53/34**

(21) Application number : **87903830.5**

(22) Date of filing : **02.06.87**

(86) International application number :
**PCT/SE87/00267**

(87) International publication number :
**WO 87/07528 17.12.87 Gazette 87/28**

(54) **METHOD FOR DESULPHURISING DIRECTLY FLUE GAS IN A FURNACE.**

(30) Priority : **03.06.86 SE 8602498**

(43) Date of publication of application :
**22.06.88 Bulletin 88/25**

(45) Publication of the grant of the patent :
**10.04.91 Bulletin 91/15**

(84) Designated Contracting States :
**AT BE CH DE FR GB IT LI LU NL SE**

(56) References cited :
**WO-A-85/02453**
**AT-B- 371 371**
**DE-A- 3 325 570**
**DE-A- 3 441 726**
**SE-B- 438 904**

(73) Proprietor : **EUROC RESEARCH AB**
**Ideon**
**S-223 70 Lund (SE)**

(72) Inventor : **BJERLE, Ingemar**
**Talltitevägen 24**
**S-237 00 Bjärred (SE)**
Inventor : **SVENSSON, Owe**
**Svalörtvägen 32**
**S-240 21 Löddeköpinge (SE)**
Inventor : **STRÖMBERG, Peter**
**Skarpskyttevägen 18 B**
**S-222 42 Lund (SE)**
Inventor : **HAKANSSON, Hans-Bertil**
**Ryttmästarevägen 12**
**S-302 35 Halmstad (SE)**

(74) Representative : **Ström, Tore et al**
**Ström & Gulliksson AB Studentgatan 1 P.O.**
**Box 4188**
**S-203 13 Malmö (SE)**

## Description

The invention relates to a method for desulphurising directly flue gas in a furnace by dry injection of a calcium-base $SO_2$ absorbent into the furnace as a particulate material suspended in an air stream.

Dry injection of calcium-base $SO_2$ absorbents, such as limestone and dolomite as well as quick and slack lime, into furnaces is a technique which has been used for several decades in order to prevent, in burning fuel containing sulphur, the sulphur from escaping to the atmosphere with the departing flue gas and causing severe environmental problems. However, it has been found difficult to obtain by such injection an effective binding of the sulphur; in the very best case a separation degree of 50% has been measured at stoichiometries relating to the mol relationship Ca/S, which are greater than 2. As a consequence thereof it has not been possible to use the method more generally; the method has been used in such cases only wherein a limited purification of the flue gas has been deemed sufficient. In other cases more complicated and expensive alternative methods have been resorted to. Just because the dry injection technique is so simple compared with other methods, it would be advantageous, however, if it could be improved so as to increase the efficiency thereof. The purpose of the present invention is to provide such an improvement without making the method more complicated.

Notwithstanding extensive research having been made all over the world for several decades one has not succeeded so far in getting a clear understanding of the reaction mechanism of the dry injection process. Many trials have been made in a large scale in an effort to explain the basic and limiting mechanisms of the absorption, but it has not been possible to define exactly the trial parameters.

The reaction system of interest is heterogeneous, which means that reactants and products must diffuse through a gas film surrounding each particle of the absorbent, as well as a product layer, viz. a layer of $CaSO_4$ produced on the particle by the reaction. Said layer surrounds the active portion of the particle consisting of the calcium-base $SO_2$ absorbent, and the thickness thereof increases as the reaction proceeds. If the reaction all the time took place on the surface of the grain, the gas film diffusion only would determine the reaction speed. During the development work which has preceded the invention, it has been possible, however, to eliminate in laboratory tests the gas phase resistance by performing the tests at low total pressures of the order of 1 mbar, and then it has been possible to show that it is in fact the diffusion of $SO_2$ and $O_2$ through the product layer, which determines the reaction speed. In order to achieve a sufficiently fast reaction and thus to make the dry injection method more effective, a small particle size of the absorbent is therefore required to enlarge the reaction surface. Then, it has been found that the particle size should be less than 10 μm and preferably should be as small as 1 μm, which is contrary to the common opinion that materials having small particle sizes below 50 μm are not only difficult to handle and to supply to the furnace but also do not provide an improvement of the binding of sulphur to the absorbent. Such small particle sizes therefore have not been of interest so far in connection with flue gas purification by applying the dry injection technique.

Having found that the opinion previously maintained concerning the choice of the particle size of the absorbent, is wrong and that considerably smaller particle sizes are required in order to make the dry injection method more efficient, the method of the invention has obtained the characteristics appearing from claim 1.

The positive effect of a small particle size can get lost if the particles are present as agglomerates, and according to an important further development of the invention, it is therefore intended to provide the desired particle size by using a fluidized bed in direct connection with the injection of the absorbent into the furnace, the problems connected with storing and handling materials of a very small particle size, being avoided as a consequence thereof.

In order to explain the invention in more detail reference is made to the accompanying drawings in which

FIG. 1 is a diagrammatic picture of a plant for working the method of the invention, and

FIG. 2 is a diagrammatic vertical sectional view of the fluidizing vessel in a modified embodiment thereof.

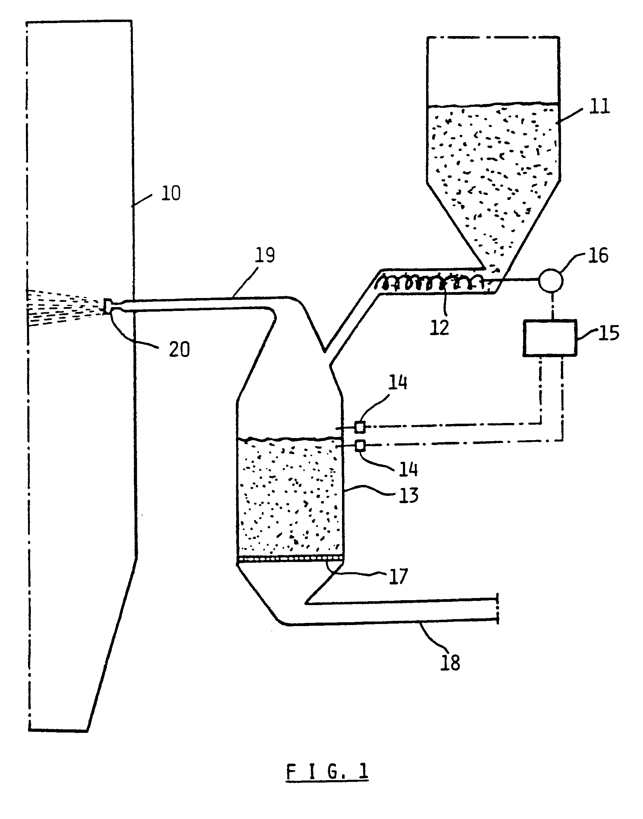

In FIG. 1 there is shown fragmentarily a boiler 10 into which dry injection of a calcium-base $SO_2$ absorbent shall take place to desulphurise directly the flue gas produced in the boiler. A plant arranged in connection with the boiler, for the supply of the absorbent comprises a storing silo 11 for receiving the absorbent as a particulate material in dry condition. This material can include particles and/or agglomerates of particles having a size which is larger than the particle size of the material to be used for desulphurising in the boiler; e.g. the particle size can be 100% below 40 μm. This material is thus too coarse for use in the application of the method of the invention but can be easier stored and handled. By means of a screw conveyor 12 the material is supplied to a fluidizing vessel 13 in which there is maintained a material level within predetermined limits which are determined by level sensors 14 controlling over automatic control means 15 the drive motor 16 of the conveyor. The material bed in the fluidizing vessel is supported by an air-permeable bottom 17, and below this bottom there is a conduit 18 for the supply of pressurized air the pressure and flow of which can be controlled by applying known technique by means not shown in detail herein. The fluidizing vessel communicates at the top thereof through a conduit 19 with a nozzle 20 opening in the boiler 10.

When pressurized air is supplied through the conduit 18, the bed of absorbent in the fluidizing vessel will be fluidized. The particles in the fluidized bed therefore will be kept steadily moving. They will wear against each other and will collide with each other, which prevents the formation of agglomerates, existing agglomerates at the same time being crashed, and produces particle fractions having a smaller grain size than that of the material supplied from the storing silo. The pressurized air supplied will escape from the fluidizing vessel through the conduit 19 to be injected into the boiler through the nozzle 20, and by suitable control of the pressure and the flow of the pressurized air it can be achieved that only particles of the absorbent the size of which is below a predetermined maximum size, are entrained into the escaping air flow to be injected through the nozzle 20 into the boiler, suspended in said flow, coarser particles being separated in the freeboard above the bed and being returned to the bed. Said maximum size according to the invention should be 10 $\mu$m but preferably is considerably smaller, rather below 5 $\mu$m and in the optimum case about 1 $\mu$m. The injection of the absorbent into the boiler through the nozzle 20 must take place at a sufficiently high speed in order that there will be obtained an air jet with absorbent suspended therein, which has a sufficient reach in the boiler for effective treatment of the flue gas existing in the boiler. Possibly, several nozzles distributed over the circumference of the boiler, can be connected to a common fluidizing vessel, or alternatively several fluidizing vessels can be provided and can be located with the associated nozzles thereof at different positions along the circumference of the boiler.

Thus, when applying the method of the invention, the absorbent can be present in a form which makes the absorbent easy to transport and store up to the use thereof, i.e. it can have a relatively large particle size, the absorbent when it is to be used being given the grain size which it shall have according to the invention, in close connection with the injection. Then, it is not necessary to take into consideration bridging and agglomerate formation of the kind existing in storing and handling such materials having small grain sizes as are involved in the application of the method of the invention, and if agglomerates nevertheless should appear, they will be crashed in the fluidized bed. This simplification of the handling is important as is, of course, the increased effectiveness of the absorbent obtained by applying the method of the invention.

The grinding action produced in the fluidized bed can be considerably improved by including in the fluidized bed crashing bodies of a material other than the absorbent, e.g. sand or another particulate material which is harder than the absorbent.

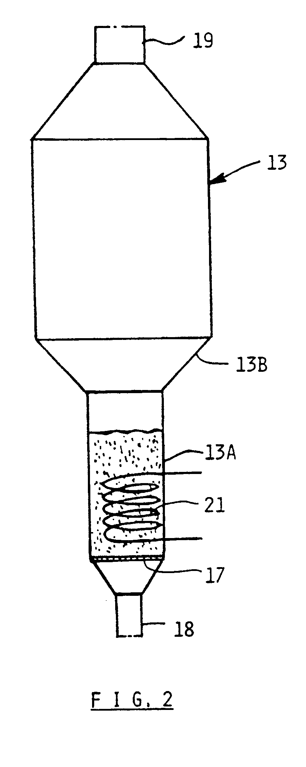

Despite the requirement of high injection speed considering the reach in the boiler as mentioned above, it is at the same time important to keep the amount of air low. This can be achieved by the bed in the fluidizing vessel being received in a conical portion of the vessel, which widens upwards from the lower end where the air-permeable bottom is located, or still better by constructing the fluidizing vessel as in FIG. 2. In the fluidizing vessel shown therein, the material bed is received in a cylindrical portion 13A and the vessel widens conically above the bed at 13B so that there is provided over the bed a freeboard having a larger cross-sectional area than the bed, for separation of coarse particles and the return thereof to the fluidized bed.

FIG. 2 shows also another modification. In the bed, a tube coil 21 is provided for circulating steam or another heating fluid for heating the bed in the fluidizing vessel 13. Such heating is required in case the absorbent is present as a slurry of water and absorbent in particulate form, and is stored in a storing tank. Then, the absorbent can have a smaller particle size, e.g. 100% below 2 $\mu$m, or smaller, and is pumped from the storing tank into the material bed which is heated for evaporation of the water supplied.

## Claims

1. Method for desulphurising directly flue gas in a furnace by injection of a calcium-base $SO_2$ absorbent into the furnace as a particulate material suspended in an air stream, **characterized** in that the particulate material has a maximum particle size of 10 $\mu$m.

2. Method as in claim 1 wherein the particle size is smaller than 5 $\mu$m.

3. Method as in claim 1 wherein the particle size is about 1 $\mu$m.

4. Method as in claim 1 further comprising the steps of storing the absorbent as a particulate material comprising bodies of the material having a size which is larger than the particle size of the material to be suspended in the air stream, and reducing the size of the bodies of material immediately before the injection.

5. Method as in claim 4 wherein the absorbent is stored in dry condition.

6. Method as in claim 4 wherein the absorbent is stored as a water slurry.

7. Method as in claim 6 wherein the material before the injection is allowed to stay in a bed of the absorbent, is fluidized by means of pressurized air, so as to reduce the size of the bodies of material and prevent the formation of agglomerates.

8. Method as in claim 7 wherein the fluidized bed in addition to the absorbent contains crashing bodies of another material which is harder than the absorbent.

9. Method as in claims 6 and 7 wherein the slurry of particulate material and water is dried in the fluidized bed by maintaining the bed at an elevated temperature.

10. Method as in claim 7 wherein the speed of the pressurized air is reduced when the air has passed through the fluidized bed, by allowing the pressurized air to escape to an enlarged freeboard provided above the bed, for separation of coarse particles and the return thereof to the fluidized bed.

## Ansprüche

1. Verfahren zur direkten Entschwefelung von Rauchgas in einem Ofen durch Injektion eines auf Calcium basierenden $SO_2$-Ab sorptionsmittel in den Ofen als partikelförmiges Material, das in einem Luftstrom suspendiert ist, dadurch gekennzeichnet, daß das partikelförmige Material eine maximale Partikelgröße von 10 μm aufweist.

2. Verfahren nach Anspruch 1, worin die Partikelgröße geringer als 5 μm ist.

3. Verfahren nach Anspruch 1, worin die Partikelgröße etwa 1 μm beträgt.

4. Verfahren nach Anspruch 1, das weiterhin die Schritte der Lagerung des Absorptionsmittels als partikelförmiges Material, das Körper des Materials mit einer Größe umfaßt, die größer als die Partikelgröße des im Luftstrom zu suspendierenden Materials ist, und der Reduzierung der Größe der Körper dieses Materials unmittelbar vor dem Einspritzen umfaßt.

5. Verfahren nach Anspruch 4, worin das Absorptionsmittel im trockenen Zustand gelagert wird.

6. Verfahren nach Anspruch 4, worin das Absorptionsmittel in einer Wasseraufschlämmung gelagert wird.

7. Verfahren nach Anspruch 6, worin das Material vor der Injektion in einem Absorptionsmittelbett bleiben kann, durch Druckluft fluidisiert wird, um die Größe der Materialkörper zu verringern und die Bildung von Agglomeraten zu verhindern.

8. Verfahren nach Anspruch 7, worin das Wirbelschichtbett zusätzlich zum Absorptionsmittel Prallkörper eines anderen Materials enthält, das härter als das Absorptionsmittel ist.

9. Verfahren nach Anspruch 6 und 7, worin die Aufschlämmung des partikelförmigen Materials und des Wassers im Wirbelschichtbett getrocknet wird, indem das Bett bei erhöhter Temperatur gehalten wird.

10. Verfahren nach Anspruch 7, worin die Geschwindigkeit der Druckluft reduziert wird, wenn die Luft durch das Wirbelschichtbett hindurchgegangen ist, indem die Druckluft in einen vergrößerten Spielraum entweichen kann, der oberhalb des Bettes vorgesehen ist, um die groben Partikel abzutrennen und zum Wirbelschichtbett zurückzuführen.

## Revendications

1. Procédé pour la désulfuration directe de gaz de fumée dans un four par injection à sec d'un absorbant de $SO_2$ à base de calcium dans le four, sous la forme d'une matière particulaire mise en suspension dans un courant d'air, caractérisé en ce que la matière particulaire a une dimension maximale de particule de 10 μm.

2. Procédé selon la revendication 1, dans lequel la dimension de particule est inférieure à 5 μm.

3. Procédé selon la revendication 1, dans lequel la dimension de particule est d'environ 1 μm.

4. Procédé selon la revendication 1, comprenant en outre les opérations de stockage de l'absorbant sous la forme d'une matière particulaire comprenant des corps de la matière ayant une dimension qui est plus grande que la dimension de particule de la matière destinée à être mise en suspension dans le courant d'air, et la réduction de la dimension des corps de matière immédiatement avant l'injection.

5. Procédé selon la revendication 4, dans lequel l'absorbant est stocké à l'état sec.

6. Procédé selon la revendication 4, dans lequel l'absorbant est stocké sous la forme d'une bouillie aqueuse.

7. Procédé selon la revendication 6, dans lequel la matière avant l'injection est amenée à rester dans un lit de l'absorbant, est fluidisée au moyen d'air sous pression, de façon à réduire la dimension des corps de matière et à empêcher la formation d'agglomérats.

8. Procédé selon la revendication 7, dans lequel le lit fluidisé en plus de l'absorbant contient des corps d'écrasement d'une autre matiere qui est plus dure que l'absorbant.

9. Procédé selon les revendications 6 et 7, dans lequel la bouillie de matière particulaire et d'eau est séchée dans le lit fluidisé par maintien du lit à une température élevée.

10. Procédé selon la revendication 7, dans lequel la vitesse de l'air sous pression est réduite lorsque l'air a traversé le lit fluidisé, en laissant l'air sous pression s'échapper dans un volume libre agrandi disposé au-dessus du lit, pour la séparation de particules grossières et leur renvoi vers le lit fluidisé.

F I G. 1

F I G. 2